# EUROPEAN PATENT APPLICATION

(11) **EP 2 420 457 A1**
(43) Date of publication of application: **22.02.2012**
(21) Application number: 10764520.2
(22) Date of filing: 16.04.2010
(51) Int. Cl.: B65D 65/40, B32B 27/18, B32B 27/36, C08K 3/00, C08L 101/00

(54) **PACKAGE**

(30) Priority: 17.04.2009 JP 2009101021
(71) Applicant: Toyo Seikan Kaisha, Ltd., Tokyo 100-8522 (JP)
(72) Inventor: KIKUCHI, Atsushi, Yokohama-shi Kanagawa 240-0062 (JP); SASAI, Misa, Yokohama-shi Kanagawa 240-0062 (JP); FUNAOKA, Shinichiro, Yokohama-shi Kanagawa 240-0062 (JP); TAKAHASHI, Yukiko, Yokohama-shi Kanagawa 240-0062 (JP)
(74) Representative: Müller-Boré & Partner Patentanwälte
(86) International application number: PCT/JP2010/056815
(87) International publication number: WO 2010/119938

(57) **Abstract**

[Problems] To provide a package excellent in barrier property, transparency and appearance, and having a layer forming an island-in-the-sea structure of a small domain diameter and a high domain density without impairing the formability into containers.

[Means for Solution] A package having a mixed layer of a mixture of a base resin and a functional resin composition containing inorganic fine particles, wherein the mixed layer forms an island-in-the-sea structure in which the base resin is forming a continuous phase and the functional resin composition is forming discontinuous phases, and the area percentage of the functional resin composition in cross section is 25 to 55%.

## Description

### Technical Field:

This invention relates to a package having a layer forming an island-in-the-sea structure that comprises a base resin and a functional resin composition containing inorganic fine particles. More specifically, the invention relates to a multi-layer package excellent in barrier property and transparency, and forming an island-in-the-sea structure of a high domain density without impairing the formability into containers.

### Background Art:

In order to improve preservability of contents in the plastic packing containers, the container walls have heretofore been formed in a multi-layer structure using a polyester resin as inner and outer layers, and using, as an intermediate layer, a functional resin such as an ethylene/vinyl alcohol copolymer or a xylylene group-containing polyamide resin for improving gas-barrier property, or a cyclic olefin copolymer for improving water vapor (moisture)-barrier property (patent document 1).

To further improve the function such as gas-barrier property or to impart any other functions, attempts have also been made to add oxidizing organic components and transition metal catalysts to the functional resin. There has, further, been proposed a package including a layer having an island-in-the-sea structure in which discontinuous phases (island portions) of a functional resin composition are formed in a continuous phase (sea portion) of a base resin, and there has been described that such a package has excellent barrier property and transparency (patent documents 2 and 3).

To further improve barrier property of the functional resin, there has been proposed to add an inorganic pigment. For instance, the following patent document 4 discloses blending a xylylene group-containing polyamide with an organic clay to further improve gas-barrier property of the xylylene group-containing polyamide resin.

### Prior Art Documents:

### Patent Documents:

- Patent document 1:: JP-A-2005-067637
- Patent document 2:: JP-A-2005-112468
- Patent document 3:: JP-A-2005-119693
- Patent document 4:: JP-A-2004-142444

### Outline of the Invention:

### Problems that the Invention is to Solve:

When a layer having an island-in-the-sea structure is to be formed by using a mixture of the base resin and the functional resin composition, the function or transparency possessed by the functional resin composition can be desirably expressed by controlling the island portions (domains) to possess a desired diameter by adjusting the melt viscosities of the base resin and the functional resin composition depending on the blended amounts of the base resin and the functional resin composition.
If a melt viscosity of the functional resin composition is higher than a melt viscosity of the base resin, in general, the island-in-the-sea structure can be easily formed despite the functional resin composition is blended in large amounts. If the melt viscosity of the base resin is low, however, the formability becomes poor and it becomes difficult to efficiently produce the containers. Further, if the functional resin composition is blended in large amounts to effectively obtain the function of the functional resin composition, then it becomes difficult to form the island-in-the-sea structure, and the package exhibits pearl-like appearance due to a difference in the refractive index between the base resin and the functional resin.
It is, therefore, an object of the present invention to provide a package excellent in barrier property, transparency and appearance, and having a layer forming an island-in-the-sea structure of a small domain diameter and a high domain density without impairing the formability into containers.

### Means for Solving the Problems:

According to the present invention, there is provided a package having a mixed layer of a mixture of a base resin and a functional resin composition containing inorganic fine particles (hereinafter often simply called "functional resin composition"), wherein the mixed layer forms an island-in-the-sea structure in which the base resin is forming a continuous phase and the functional resin composition is forming discontinuous phases, and the area percentage of the functional resin composition in cross section is 25 to 55%. If the area percentage is larger than the above range, the appearance becomes defective due to whitening and if the area percentage is smaller than the above range, barrier property becomes poor.

In the package of the invention, it is desired that:
1. The mixed layer is formed under a condition in which the melt viscosity of the base resin is smaller than the melt viscosity of the functional resin composition under a condition of a shear rate of 1 to 50 sec⁻¹;
2. The functional resin composition comprises inorganic fine particles and a barrier resin; and
3. The mixed layer is formed as an intermediate layer between the inner and outer layers of a thermoplastic polyester resin.

According to the present invention, an important feature resides in the formation of an island-in-the-sea structure in which fine domains are formed in many number without sacrificing the formability into a package by utilizing a property in that the melt viscosity of the functional resin composition containing inorganic fine particles becomes greater than that of the base resin in a range of low shear rates.

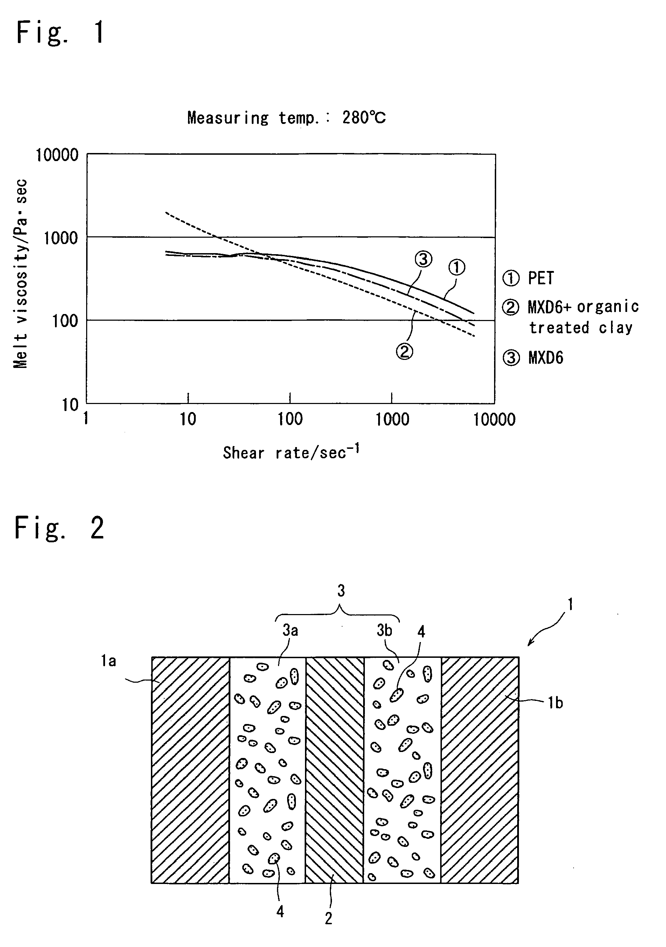

Fig. 1 shows melt viscosities of the base resin (PET), functional resin (MXD6), and functional resin composition (MXD6 + organic treated clay) of the functional resin (MXD6) and the inorganic fine particles (organic treated clay) blended at a ratio of 97:3 with respect to the shear rate. It will be obvious from Fig. 1 that the melt viscosity of the functional resin composition is lower than the melt viscosity of the base resin in a range of 50 to 1000 sec⁻¹ but the melt viscosity of the functional resin composition is higher than the melt viscosity of the base resin in a range of shear rates of 1 to 50 sec⁻¹. The reason is attributed to that the inorganic fine particles are neighboring one another being dispersed in the functional resin composition, and a three-dimensional structure is constituted by the intermolecular forces of the inorganic fine particles exhibiting specific viscosity characteristics.

As described above, if the melt viscosity of the functional resin composition forming the discontinuous phases (island portions) is higher than the melt viscosity of the base resin, it becomes possible to form the mixed layer in which fine discontinuous phases are formed in many number despite the functional resin composition is blended in large amounts, but formability into the package decreases.
By utilizing the above-mentioned property of the functional resin composition containing inorganic fine particles according to the present invention, formability into the package is maintained by forming the package under a condition in which the melt viscosity of the functional resin composition containing inorganic fine particles is higher than the melt viscosity of the base resin while forming the mixed layer having an island-in-the-sea structure in which the base resin forms the continuous phase and the functional resin composition forms the discontinuous phases.
Besides, according to the present invention, since inorganic fine particles are contained in the functional resin composition, the island-in-the-sea structure can be easily formed despite the functional resin composition is blended in large amounts. Even when the functional resin composition is blended in such relatively large amounts that the discontinuous phases of the functional resin composition are in a range of 25 to 55% in terms of the area ratio, it is made possible to obtain a package having the mixed layer in which fine discontinuous phases of the functional resin are stably formed.

### Effects of the Invention:

In the present invention, the island-in-the-sea structure is formed in the mixed layer, and the area percentage of the functional resin composition in cross section thereof is in a range of 25 to 55%, making it possible to efficiently express the function stemming from the functional resin having barrier property, to improve the adhesion between the mixed layer containing the base resin and the other layer, and to effectively prevent peeling among the layers in the multi-layer structure.
Further, since the island-in-the-sea structure formed in the mixed layer has islands (domains) of small diameters constituting a small-islands-dispersed-in-sea structure, expression of pearl-tone luster is effectively prevented, that is specific to the resin composition comprising the base resin and the functional resin composition, and excellent transparency is obtained, too.
As described above, further, the package of the invention makes it possible to form the mixed layer having the island-in-the-sea structure without impairing the formability into the package.

### Brief Description of the Drawings:

[Fig. 1] is a diagram showing melt viscosities of a base resin (PET), a functional resin (MXD6) and an functional resin composition containing inorganic fine particles (MXD6 + organic treated clay) with respect to the shear rate.
[Fig. 2] is a view illustrating in cross section the structure of an unstretched portion of a package of the invention.

### Mode for Carrying Out the Invention:

### (Island-in-the-sea structure)

In the invention, an important feature resides in that the package has the mixed layer forming the island-in-the-sea structure which is forming a continuous phase (sea portion) of the base resin and discontinuous phases (island portions) of the functional resin composition, the area percentage of the functional resin composition in cross section thereof being in a range of 25 to 55% and, specifically, 27 to 55%. Here, the area ratio stands for a ratio of the area of the island potions of the functional resin composition to the whole area of the mixed layer in any cross section.
In the invention, since the island portions comprising the functional resin composition are present at an area percentage in the above range, the function such as gas-barrier property possessed by the functional resin is desirably expressed, and the adhesion among the layers is improved, too, due to the base resin.
In the package of the invention as described above, the island-in-the-sea structure in the mixed layer is formed by being melt-blended under the condition where the melt viscosity of the functional resin composition is larger than the melt viscosity of the base resin. The melt viscosities are adjusted by so setting the shape of the screw in the cylinder of the forming machine, rotational speed thereof, temperature and injection speed that the shear rate becomes 1 to 50 sec⁻¹, and the base resin and the functional resin composition are blended in a manner that the area percentage of the functional resin composition lies in the above range.
In the island-in-the-sea structure in the mixed layer of the invention, further, it is desired that the discontinuous phases (island portions) comprising the functional resin composition containing inorganic fine particles have an average grain size in a range of 1.5 to 5.5 µm in the unstretched portion.

### (Base resin)

As the base resin used in the invention, there can be exemplified thermoplastic polyester resin, polycarbonate resin, polyacrylonitrile resin, polyolefin resin and polyvinyl chloride resin. Among them, the thermoplastic polyester resin is preferred. Among the thermoplastic polyester resins, further, it is particularly desired to use polyethylene terephthalate (PET), copolymer using isophthalic acid or cyclohexanedimethanol (CHDM) as part of terephthalic acid or ethylene glycol in the polyethylene terephthalate, or polyethylene naphthalate.

When the package comprising at least the inner and outer layers and the intermediate layer, uses, as the intermediate layer, a mixed layer of a mixture of the base resin and the functional resin, it is desired that the base resin has adhesiveness to the resin that constitutes the layers that come in contact with the intermediate layer.
Namely, as the base resin, there can be used the resin of the same kind as that of the inner and outer layers, or the one that has heretofore been used as an adhesive resin for forming an adhesive layer, such as carboxylic acid like maleic acid, itaconic acid or fumaric acid, or graft-modified olefin resin graft-modified with an anhydride of the above carboxylic acid or with amide or ester. As the olefin resin that is to be graft-modified, there can be preferably used polyethylene, polypropylene or ethylene/α-olefin copolymer.
In addition to the graft-modified olefin resin, there can be used as the adhesive resin, for example, ethylene/acrylic acid copolymer, ionically crosslinked olefin copolymer, ethylene/vinyl acetate copolymer, copolymerized polyester and copolymerized polyamide. It is desired that the adhesive resin contains carbonyl groups (>C=O) on the main chain or side chain thereof in an amount of 1 to 100 meq/100 g of the resin and, specifically, 10 to 100 meq/100 g of the resin.
The base resin may be blended with known resin blending agents, such as filler, coloring agent, heat stabilizer, weather resisting stabilizer, anti-aging agent, photo stabilizer, ultraviolet ray absorber, antistatic agent, lubricant such as metal soap or wax, and resin or rubber for reforming according to recipe known per se.

### (Inorganic fine particles)

The inorganic fine particles used in the invention are inorganic fine particles having an average grain size of not larger than 10 µm and, specifically, in a range of 1 to 5 µm. Adding them to the functional resin and kneaded together therewith, undergo inorganic fine particles exfoliation, that cause the permeating gasses to detour. Therefore, the gas-barrier property can be further improved being compounded by the gas-barrier property possessed by the gas-barrier resin.
As the inorganic fine particles used in the invention, there can be exemplified inorganic fine particles comprising known lamellar compounds, metal oxides and metals.
Specifically, there can be used silicate minerals such as mica, vermiculite and smectite and, preferably, lamellar silicates of the type of 2-octahedron and 3-octahedron having electric charge densities of 0.25 to 0.6. As the 2-octahedrons, there can be preferably used montmorillonite, beidellite and nontronite. As the 3-octahedrons, there can be preferably used clays such as hectorite and saponite.
It is specifically desired to use an organic treated clay obtained by swell-treating a clay with an organizing agent. In this case, among the above clays, the montmorillonite is particularly desired since it has highly swelling property, undergoes the swelling as the organizing agent permeates therein, and space among the layers spreads.
As the organizing agent, a quaternary ammonium salt is preferably used. More preferably, a quaternary ammonium salt having at least one or more alkyl groups with not less than 12 carbon atoms is used and, concretely, a trimethyldodecylammonium salt or a trimethyltetradecylammonium salt is used.

In the invention, the inorganic fine particles are added to the functional resin at a ratio of 1 to 10% by weight and, specifically, 1 to 8% by weight. If the amount of the inorganic fine particles is less than the above range, the gas-barrier property is not sufficiently attained by the addition of the inorganic fine particles as compared to when the inorganic fine particles are added in an amount in the above-mentioned range. If the amount of the inorganic fine particles is more than the above range, on the other hand, the formability becomes inferior to that of when the inorganic fine particles are added in an amount in the above-mentioned range, which is not desirable.

### (Functional resins)

In the invention, the functional resins that impart the function of barrier property or gas-barrier property and oxygen-absorbing property to the package can be divided into the following three kinds:
(1) When a function of barrier property is to be imparted to the package of the invention, a gas-barrier resin (G1) such as ethylene/vinyl alcohol copolymer or polyamide resin (P1) is used as the functional resin (K1). When a function of water vapor-barrier property is to be imparted thereto, a cyclic olefin copolymer is used.
(2) When a function of gas-barrier property and oxygen-absorbing property is to be imparted to the package of the invention, there is used, as the functional resin (K2), an oxygen-absorbing resin composition comprising a gas-barrier resin (G2) such as ethylene/vinyl alcohol copolymer or polyamide resin (P2), an oxidizing organic component (Y2) and a transition metal catalyst (S).
(3) When a function of gas-barrier property and oxygen-absorbing property is to be imparted to the package of the invention, there are used, as the functional resin (K3), an oxidizing organic component (Y3) such as polyamide resin (P3) having gas-barrier property and oxidizing property, and the transition metal catalyst (S).

As the gas-barrier resin (G1) that can be used as the functional resin (K1), there can be preferably used an ethylene/vinyl alcohol copolymer, e.g., a saponified product of copolymer obtained by saponifying an ethylene/vinyl acetate copolymer having an ethylene content of 20 to 60 mol% and, specifically, 25 to 50 mol% that the degree of saponification is not less than 96% and, specifically, not less than 99 mol%. The ethylene/vinyl alcohol copolymer (saponified product of ethylene/vinyl acetate copolymer) must have a molecular weight large enough for forming a film and, desirably, has an intrinsic viscosity of, usually, not less than 0.01 dl/g and, specifically, not less than 0.05 dl/g as measured in a mixed solvent of phenol/water of a mass ratio of 85/15 at 30°C.

As the gas-barrier resin other than the ethylene/vinyl alcohol copolymer, there can be exemplified a polyamide resin (P1).
As the polyamide resin (P1), there can be exemplified (a) an aliphatic, alicyclic or semi-aromatic polyamide derived from a dicarboxylic acid component and a diamine component, (b) a polyamide derived from an aminocarboxylic acid or a lactam thereof, or a copolyamide thereof or a blend thereof.
Among the polyamide resins (P1), it is desired to use a xylylene group-containing polyamide to attain the object of the invention. Concretely, it is desired to use a homopolymer such as polymetaxylyleneadipamide (MXD6), polymetaxylylenesebacamide, polymetaxylylenesuberamide, polyparaxylylenepimeramide, or polymetaxylyleneazelamide; or a copolymer such as metaxylylene/paraxylyleneadipamide copolymer, metaxylylene/paraxylylenepimeramide copolymer, metaxylylene/paraxylylenesebacamide copolymer, or metaxylylene/paraxylyleneazelamide copolymer; or a copolymer obtained by copolymerizing these monopolymers or copolymers with an aliphatic diamine such as hexamethylenediamine, an alicyclic diamine such as piperazine, an aromatic diamine such as para-bis(2-aminoethyl)benzene, an aromatic dicarboxylic acid such as terephthalic acid, a lactam such as ε -caprolactam, an ω-aminocarboxylic acid such as 7-aminoheptanoic acid or an aromatic aminocarboxylic acid such as para-aminomethylbenzoic acid. Particularly preferably, however, there can be used a polyamide obtained from a diamine component comprising chiefly m-xylylenediamine and/or p-xylylenediamine, and an aliphatic dicarboxylic acid and/or an aromatic dicarboxylic acid. In this case, the diamine component comprising chiefly the xylylenediamine stands for a diamine component in which the content of xylylenediamine is not less than 60 mol%, preferably, not less than 70 mol% and, particularly preferably, not less than 80 mol%.
The xylylene group-containing polyamide has superior oxygen-barrier property to other polyamide resins, and is particularly desired for attaining the object of the invention.
The polyamide resin (P1), too, must have a molecular weight large enough for forming a film, and has a relative viscosity of, desirably, not less than 1.1 and, specifically, not less than 1.5 as measured, for example, in the concentrated sulfuric acid (concentration of 1.0 g/d) at 30°C.

The above gas-barrier resin (G1) can be used as the gas-barrier resin (G2) that constitutes the functional resin (K2) for imparting gas-barrier and oxygen-absorbing functions to the package of the invention. When the polyamide resin (P2) is to be used as the gas-barrier resin (G2), in this case, it is desired that the polyamide resin that is used has gas-barrier property but does not almost have oxygen-absorbing property, and has terminal amino groups in an amount of not less than 40 eq/10⁶ g. As the polyamide resin (P2), it is desired to use a polyamide resin obtained by the polycondensation reaction of the diamine component chiefly comprising the xylylenediamine and the dicarboxylic acid component and, specifically, to use a xylylene group-containing polyamide resin. Here, the diamine component comprising chiefly the xylylenediamine stands for a diamine in which the content of xylylenediamine is not less than 60 mol%, preferably, not less than 70 mol% and, specifically, not less than 80 mol%.

Further, the polyamide resin (P3) can be exemplified as the oxidizing organic component (Y3) that constitutes the functional resin (K3) for imparting gas-barrier and oxygen-absorbing functions to the package of the invention. In this case, it is desired that the polyamide resin (P3) that is used has gas-barrier property and oxygen-absorbing property, and has terminal amino groups in an amount of less than 40 eq/10⁶ g. As the polyamide resin (P3), it is desired to use a polyamide resin obtained by the polycondensation reaction of the diamine component chiefly comprising the xylylenediamine and the dicarboxylic acid component and, specifically, to use a xylylene group-containing polyamide resin. Here, the diamine component comprising chiefly the xylylenediamine stands for a diamine in which the content of xylylenediamine is not less than 60 mol%, preferably, not less than 70 mol% and, specifically, not less than 80 mol%.

As the oxidizing organic component (Y2), there can be exemplified an ethylenically unsaturated group-containing polymer. That is, the polymer has a carbon-carbon double bond. The double-bonded portion is easily oxidized with oxygen; i.e., oxygen is absorbed and trapped. The ethylenically unsaturated group-containing polymer is derived, for example, from polyene as a monomer.
Though not limited thereto only, preferred examples of the polyene include conjugated dienes such as butadiene and isoprene; chain nonconjugated dienes such as 1,4-hexadiene, 3-methyl-1,4-hexadiene, 4-methyl-1,4-hexadiene, 5-methyl-1,4-hexadiene, 4,5-dimethyl-1,4-hexadiene and 7-methyl-1,6-octadiene; cyclic nonconjugated dienes such as methyltetrahydroindene, 5-ethylidene-2-norbornene, 5-methylene-2-norbornene, 5-isopropylidene-2-norbornene, 5-vinylidene-2-norbornene, 6-chloromethyl-5-isopropenyl-2-norbornene and dicyclopentadiene; trienes such as 2,3-diisopropylidene-5-norbornene, 2-ethylidene-3-isopropylidene-5-norbornene and 2-propenyl-2,2-norbornadiene; and chloroprene. As the oxidizing polymer, there can be used a homopolymer of the above polyene, or a random copolymer or a block copolymer of two or more of the above polyenes in combination or in further combination with other monomers.
As the other monomers to be copolymerized with the above polyenes, there can be exemplified α-olefins having 2 to 20 carbon atoms, such as ethylene, propylene, 1-butene, 4-methyl-1-pentene, 1-hexene, 1-heptene, 1-octene, 1-nonene, 1-decene, 1-undecene, 1-dodecene, 1-tridecene, 1-tetradecene, 1-pentadecane, 1-hexadecene, 1-heptadecene, 1-nonadecene, 1-eicosene, 9-methyl-1-decene, 11-methyl-1-dodecene and 12-ethyl-1-tetradecene. In addition to them, there can be, further, used styrene, vinyltriene, acrylonitrile, methacrylonitrile, vinyl acetate, methyl methacrylate and ethyl acrylate.
In the invention, among the polymers derived from the above polyenes, it is desired to use polybutadiene (BR), polyisoprene (IR), natural rubber, nitril-butadiene rubber (NBR), styrene-butadiene rubber (SBR), chloroprene rubber and ethylene-propylene-diene rubber (EPDM) though the invention is in no way limited thereto only.
In addition to the above ethylenically unsaturated group-containing polymers, there can be further used polymers that can be easily oxidized by themselves, such as polypropylene and ethylene/propylene copolymer as oxidizing organic components.

It is desired that the polyene type polymers are acid-modified polyene polymers into which carboxylic acid groups, carboxylic anhydride groups or hydroxyl groups are introduced. As the monomers used for introducing these functional groups, there can be exemplified ethylenically unsaturated monomers having functional groups.
The oxidizing organic component comprising these oxidizing polymers or copolymers thereof is desirably contained in the oxygen-absorbing resin composition at a ratio of 0.01 to 10% by weight and, specifically, at a ratio of 1 to 8% by weight.

The functional resins (K2, K3) of the invention can use the same transition metal catalyst (S). As the transition metal catalyst (S), there can be preferably used a metal of the Group VIII of periodic table, such as iron, cobalt or nickel. There can be, further, used a metal of the Group I, such as copper or silver, a metal of the Group IV, such as tin, titanium or zirconium, a metal of the Group V, such as vanadium, a metal of the Group VI, such as chromium, or a metal of the Group VII, such as manganese. Among them, cobalt works to greatly enhance oxygen-absorbing property (oxidation of the oxidizing organic component) and is, particularly, suited for the object of the invention. The transition metal catalyst (S) is, usually, used in the form of a low-valent inorganic salt, organic salt or complex of the transition metal. Among the transition metal catalysts (S), a carboxylate of cobalt is particularly desired.

It is desired that the oxygen-absorbing resin composition constituting the functional resins (K2 and K3) used in the invention contains the transition metal catalyst (S) at a concentration of 100 to 3000 ppm calculated as a transition metal or, concretely, contains cobalt at a concentration of 100 to 2000 ppm, iron at a concentration of 150 to 1500 ppm or manganese at a concentration of 200 to 2000 ppm.

### (Functional resin compositions)

In the invention, the above functional resins (K1, K2, K3) or, concretely, the gas-barrier resins (G1, G2, G3) or the oxygen-absorbing resin compositions (Y2 and Y3) may be blended with known resin blending agents, such as filler, coloring agent, heat stabilizer, weather resisting stabilizer, anti-aging agent, photo stabilizer, ultraviolet ray absorber, antistatic agent, lubricant such as metal soap or wax, and resin or rubber for reforming according to recipe known per se. in addition to being blended with the above-mentioned inorganic fine particles.
Prior to being mixed into the base resin, further, it is desired that the inorganic fine particles are dispersed in advance in the functional resin.

### (Package)

The package of the invention can be used in the form of bottle, cup, tray, tubular container, film or sheet and, desirably, has a multi-layer structure from the standpoint of lovely looking, appearance and flavor-retaining property. The package, however, may have a single-layer structure.
In the case of the multi-layer structure having at least one mixed layer of a mixture of the base resin and the functional resin composition containing inorganic fine particles, it is usually desired that the mixed layer is provided on the inside of the outer surface of the container so that the inorganic fine particles will not be exposed on the outer surface of the container. It is, further, desired that the mixed layer is provided on the outside of the inner surface of the container so will not to come in direct contact with the content. Thus, the mixed layer is desirably used as at least one intermediate layer of the multi-layer container.

Fig. 2 is a schematic view of the multi-layer structure of an unstretched portion that has not been subjected to the stretch working in the multi-layer package of the invention. The multi-layer package 1 is of a two-kind-five-layer structure including an inner layer la, an outer layer 1b, an intermediate layer 2 and mixed layers 3. Between the inner layer 1a and the intermediate layer 2, and between the outer layer 1b and the intermediate layer 2, there are provided mixed layers 3 of an island-in-the-sea structure in which discontinuous phases 3b of the functional resin composition are formed in a continuous phase 3a of the base resin. Inorganic fine particles 4 are dispersed in the discontinuous phases 3b.
Not being limited to the above constitution only, it is also allowable to use any known constitution such as two-kind-three-layer multi-layer structure having a mixed layer between the inner layer and the outer layer.

As the thermoplastic resin of the other layer to be used in combination with the mixed layer of the multi-layer package, there can be exemplified thermoplastic polyester resin, polycarbonate resin, polyacrylonitrile resin, polyolefin resin or polyvinyl chloride resin. A layer of the above gas-barrier resin may be, further, provided. In the invention as described above, use of the resin of the same kind as the base resin is desirable for improving adhesion among the layers.
As the polyolefin resin, there can be exemplified polyethylenes (PE) such as low-density polyethylene (LDPE), medium-density polyethylene (MDPE), high-density polyethylene (HDPE); linear low-density polyethylene (LLDPE) and linear very low-density polyethylene (LVLDPE), polypropylene (PP), ethylene/propylene copolymer, polybutene-1, ethylene/butene-1 copolymer, propylene/butene-1 copolymer, ethylene/propylene/butene-1 copolymer, ethylene/vinyl acetate copolymer, ionically crosslinked olefin copolymer (ionomer) and blends thereof.
Further, as other examples of the gas-barrier resin, there can be used a cyclic olefin copolymer (COC) and, specifically, a copolymer of ethylene and cyclic olefin.
There is no particular limitation on the polycarbonate resin, polyacrylonitrile resin or polyvinyl chloride resin, and there can be widely used any of them placed in the market for use as sheets.

In producing the multi-layer package, an adhesive resin may, as required, be interposed among the resin layers.
As the adhesive resin, there can be exemplified a thermoplastic resin containing carbonyl (-CO-) groups based on carboxylic acid, carboxylic anhydride, carboxylate, carboxylic acid amide or carboxylic acid ester on a main chain or a side chain at a concentration of 1 to 700 meq/100 g of the resin and, specifically, at a concentration of 10 to 500 meq/100 g of the resin. Preferred examples of the adhesive resin include ethylene/acrylic acid copolymer, ionically crosslinked olefin copolymer, maleic anhydride-grafted polyethylene, maleic anhydride-grafted polypropylene, acrylic acid-grafted polyolefin, ethylene/vinyl acetate copolymer, copolymerized polyester and copolymerized polyamide which may be used in one kind or in two or more kinds in combination. These resins can be effectively laminated by the simultaneous extrusion or by the sandwich-lamination.
The film of a mixture formed in advance can be laminated and adhered on the film of a moisture-resistant resin by also using an isocyanate type or epoxy type thermosetting adhesive resin.

When the package of the invention is used as a multi-layer package, though there is no particular limitation, it is desired that the mixed layer is formed having a thickness of 3 to 20% and, specifically, 5 to 17% of the whole thickness. If the thickness of the mixed layer becomes smaller than the above range, the barrier property becomes inferior to that of when the thickness thereof is in the above range. Even if the thickness becomes larger than the above range, no particular advantage is obtained in regard to barrier property but rather disadvantage results in regard to economy, such as an increase in the amount of the resin and in regard to container properties, such as decrease in the flexibility and softness of the material.

When the package of the invention is to be produced as a multi-layer bottle, the resins are melt-kneaded together by using an extruding machine depending upon the kinds of the resins, and the mixture thereof is formed into a preform by injection forming or compression forming, and the preform is formed into the multi-layer bottle by biaxial stretch-blow forming.
Here, in the present invention, it is important that the mixture is melt-kneaded under a condition in which the shear rate is in a range of 1 to 50 sec⁻¹. This enables the melt viscosity of the functional resin composition to become larger than the melt viscosity of the base resin, and the functional resin composition containing inorganic fine particles constitutes fine discontinuous phases (islands) in many number.

Further, when the package of the invention is to be produced in the form of a bottle, cup, tray or tubular container, the resin composition is melt-kneaded by using an extruding machine and is, thereafter, primarily formed into a film, sheet or parison through a T-die, circular die (ring die) or the like die and is, further, secondarily formed into a package of the form of bottle, cup, tray or tubular container.

### EXAMPLES

### (Preparation of a bottle)

By using a co-injection forming machine, a two-kind-three-layer (PET/intermediate layer/PET) multi-layer preform was prepared. To form the intermediate layer, a dry blend of the PET material and dry pellets of the barrier material was thrown into a hopper of the forming machine, and was co-injection-formed at 280°C by so setting the condition that the shear rate was 1 to 50 sec⁻¹. The obtained preform was heated at 92 to 103°C for 29 seconds and was blow-formed to prepare a 500-ml pressure-resistant bottle.

### (Observing the structure and measuring the area percentage of the intermediate layer)

The central portion of the preform and the lower portion of the bottle neck ring were cut out in cross section, and the cross sections of the intermediate layers were surfaced by using an ultramicrotome and on which Pt was deposited in vacuum for 30 seconds at 15 mA to obtain sample pieces. By using a scanning type electron microscope (s-3400N: manufactured by Hitachi High Technologies Co.) and at an acceleration voltage of 15 kV, the surfaces of the sample pieces were observed at a magnification of 1000 times to observe the sectional structures of the intermediate layers in order to calculate the area percentages (%) of the domains.
To calculate the area percentages (%) of the domains, the longest diameters and the shortest diameters of the domains were measured, the areas of the domains were calculated by π{(longest diameter + shortest diameter)/4}² and were integrated to find the total area of the domains. The area % of the domains was calculated as (total domain area/observed area).

### (Confirming the pearl-like tone)

The bottle was observed for its appearance with the eye to confirm if pearl-like tone was exhibited.

### (Measuring the haze)

The central portion of the bottle body wall was cut out (3 x 3 cm) and was measured by using a hazeometer [NDH-1001: manufactured by Nihon Denshoku Kogyo Co.].

### (Measuring the melt viscosity)

By using a melt viscosity measuring apparatus (CAPIROGRAPH 1B: manufactured by Toyo Seiki Seisakusho Co.), the above base resin (PET), functional resin (MXD6), and the functional resin composition (MXD6 + organic treated clay) comprising the functional resin (MXD6) and the inorganic fine particles (organic treated clay) at a ratio of 97:3, were measured for their melt viscosities under the conditions of 280°C, a resin temperature stabilization waiting time of 5 minutes, a capillary length of 10 mm, a capillary diameter of 1.0 mm and a shear rate of 6 to 6000 sec⁻¹. The results were as shown in Fig. 1.

### (Example 1)

Inner/outer layers: An isophthalic acid-copolymerized PET (isophthalic acid 1.5 mol, IV = 0.83 µg/L).
Intermediate layer: A polymetaxylyleneadipamide (MXD6) and an organic treated clay (montmorillonite) were blended together at a ratio of 97:3 to prepare a functional resin composition which was then mixed with the isophthalic acid-copolymerized PET at a mixing ratio of 3:7 to form a mixed layer. A two-kind-three-layer bottle was formed having the inner/outer layers and the intermediate layer at a weight ratio of 94:6.

### (Example 2)

A bottle was formed in the same manner as in Example 1 but forming the inner/outer layers and the intermediate layer at a weight ratio of 90:10.

### (Example 3)

A bottle was formed in the same manner as in Example 1 but setting the mixing ratio of the intermediate layer to be 4:6, and forming the inner/outer layers and the intermediate layer at a weight ratio of 95:5.

### (Example 4)

A bottle was formed in the same manner as in Example 1 but setting the mixing ratio of the intermediate layer to be 4:6, and forming the inner/outer layers and the intermediate layer at a weight ratio of 92:8.

### (Example 5)

A bottle was formed in the same manner as in Example 1 but setting the mixing ratio of the intermediate layer to be 4:6, and forming the inner/outer layers and the intermediate layer at a weight ratio of 90:10.

### (Comparative Example 1)

A bottle was formed in the same manner as in Example 1 but setting the mixing ratio of the intermediate layer to be 5:5, and forming the inner/outer layers and the intermediate layer at a weight ratio of 92:8.

### (Comparative Example 2)

A bottle was formed in the same manner as in Example 1 but setting the mixing ratio of the intermediate layer to be 5:5, and forming the inner/outer layers and the intermediate layer at a weight ratio of 90:10.

### (Comparative Example 3)

A bottle was formed in the same manner as in Example 4 but forming the intermediate layer by using the polymetaxyleneadipamide (MXD6) only.

### (Comparative Example 4)

A bottle was formed in the same manner as in Example 5 but forming the intermediate layer by using the polymetaxyleneadipamide (MXD6) only.

Table 1 shows the measured results of the domain area percentages, sectional structures of the intermediate layers, and appearances and hazes of the bottles obtained in Examples 1 to 5 and Comparative Examples 1 to 4.

By mixing the clay into the barrier material (MXD6) of the intermediate layer, the island-in-the-sea structure could be formed in the intermediate layer suppressing defective appearance caused by pearl-like tone of the bottle (Examples 4, 5 and Comparative Examples 3, 4).
When the mixing ratio of the PET and the barrier material (functional resin composition to which clay was mixed) was 5:5 (Comparative Examples 1 and 2), the island-in-the-sea structure was formed with the barrier material forming islands. However, the area percentage was in excess of 55%, and hazes have greatly increased as compared to the bottles having area ratios of not larger than 55% (Examples 1 to 5 and Comparative Examples 1 and 2).

**Table 1**

| | Inner/ outer layers | Functional resin composition | *1 | *2 | Structure of mixed layer | Domain area percentage (%) | Ave. domain diameter (µm) | Pearl tone appearance of bottle | HAZE (%) |
|---|---|---|---|---|---|---|---|---|---|
| Ex. 1 | PET | MXD6/clay | 3:7, | 94:6 | *3 | 29 | 1,80 | no | 6,0 |
| Ex. 2 | PET | MXD6/clay | 3:7 | 90:10 | *3 | 33 | 2,50 | no | 10,6 |
| Ex. 3 | PET | MXD6/clay | 4:6 | 95:5 | *3 | 44 | 3,46 | no | 4,7 |
| Ex. 4 | PET | MXD6/clay | 4:6 | 92:8 | *3 | 52 | 3,92 | no | 8,9 |
| Ex. 5 | PET | MXD6/clay | 4:6 | 90:10 | *3 | 38 | 3,12 | no | 9,6 |
| Comp. Ex. 1 | PET | MXD6/clay | 5:5 | 92:8 | *3 | 60 | 3,41 | no | 26,1 |
| Comp. Ex. 2 | PET | MXD6/clay | 5:5 | 90:10 | *3 | 56 | 3,48 | no | 28,2 |
| Comp. Ex. 3 | PET | MXD6 | 4:6 | 92:8 | continuous layer | - | - | yes | 8,0 |
| Comp. Ex. 4 | PET | MXD6 | 4:6 | 90:10 | continuous layer | - | - | yes | 8,3 |

| | | | | | | | | | |
|---|---|---|---|---|---|---|---|---|---|
| *1: Ratio of mixed layer (functional resin composition: PET) *2: Weight ratio of inner/outer layers and intermediate layer *3: island-in-the-sea | | | | | | | | | |

### Industrial Applicability:

The package of the invention is capable of preventing the flavor and taste of the content from being deteriorated by oxygen and is, further, capable of preventing the permeation of gases generated by the content which spontaneously produces pressure. Therefore, the package of the invention can be favorably used as a bottle, cup, tray or tubular container.
The contents that can be filled may be such beverages as tea, coffee, beer, wine, fruit juices, carbonated soft drinks, etc., such foods as fruits, nuts, vegetables, meet products, infant's foods, coffee, jam, mayonnaise, ketchup, edible oils, dressings, sauces, foods boiled down in soy, milk products, etc., as well as medicines, cosmetics, gasoline and the like contents that undergo the deterioration in the presence of oxygen, to which only, however, the invention is in no way limited.

### Description of Reference Numerals:

- 1: multi-layer package
- 1a: inner layer
- 1b: outer layer
- 2: intermediate layer
- 3: mixed layers
- 4: inorganic fine particles

## Claims

1. A package having a mixed layer of a mixture of a base resin and a functional resin composition containing inorganic fine particles, wherein said mixed layer forms an island-in-the-sea structure in which the base resin is forming a continuous phase and the functional resin composition is forming discontinuous phases, and the area percentage of the functional resin composition in cross section is 25 to 55%.

2. The package according to claim 1, wherein said mixed layer is formed under a condition in which the melt viscosity of the base resin is smaller than the melt viscosity of the functional resin composition under a condition of a shear rate of 1 to 50 sec⁻¹_{.}

3. The package according to claim 1, wherein said functional resin composition comprises inorganic fine particles and a barrier resin.

4. The package according to claim 1, wherein said mixed layer is formed as an intermediate layer between the inner and outer layers of a thermoplastic polyester resin.
